# EUROPEAN PATENT SPECIFICATION

(11) **EP 2 891 615 B1**
(45) Date of publication and mention of the grant of the patent: **30.12.2015**
(21) Application number: 13834134.2
(22) Date of filing: 14.08.2013
(51) Int. Cl.: B65D 85/804, A47J 31/36

(54) **CAPSULE FOR A BEVERAGE MAKER**
KAPSEL FÜR EINE GETRÄNKEZUBEREITUNGSVORRICHTUNG
CAPSULE POUR MACHINE DE PRÉPARATION DE BOISSONS

(30) Priority: 28.08.2012 ES 201231338
(43) Date of publication of application: 08.07.2015
(73) Proprietor: Cocatech, S.L.U., 28001 Madrid (ES)
(72) Inventor: FLORES ARNAIZ, Jesús Guillermo, 28001 Madrid (ES); FERNÁNDEZ SAENZ, Pedro, 28001 Madrid (ES)
(74) Representative: Ungria López, Javier
(86) International application number: PCT/ES2013/070599
(87) International publication number: WO 2014/033341

(56) References cited:
- EP-A1- 0 615 921
- EP-A1- 1 247 756
- EP-A1- 1 808 382
- EP-A1- 1 864 917
- EP-A1- 1 980 501
- EP-A1- 2 236 437
- EP-A1- 2 343 247
- WO-A1-2012/100976
- WO-A2-2006/016813
- WO-A2-2008/058633
- WO-A2-2010/013146
- US-A1- 2003 172 813
- US-A1- 2010 043 646
- US-A1- 2010 307 930

## Description

### OBJECT OF THE INVENTION

The present invention, as expressed in the statement of this specification, consists of a capsule of those used for their application in a beverage-making machine. The capsule comprises a food product inside, and the machine injects a pressurized fluid to carry out the mixture of the fluid with the food product, thus obtaining the mixture made at the outlet of the capsule. The object of the invention is to provide a new capsule configuration, which allows obtaining the mixture of the fluid with the food product when the capsule acquires a previously established pressure by injecting the fluid, thus obtaining a concentration of the product mixed with the fluid that is always the same.

In general terms, the capsule of the invention is applicable to any type of machine injecting a fluid under pressure into the capsule to obtain beverages, more precisely, it is applied to obtain infusions, and more specifically, in the preparation of coffee.

### BACKGROUND OF THE INVENTION

Patent document US 3 292 527 already describes an apparatus to prepare and dispense a beverage by means of a capsule containing a product, and the apparatus perforates said capsule to apply a fluid, thus obtaining a beverage without entering into contact with the capsule.

In addition, patent document GB 899 055 can also be quoted, which describes a capsule comprising an air chamber in which a fluid is injected under pressure to be mixed with a product contained in another chamber of the capsule, in such a way that the fluid is not injected directly on the product, but it is injected into said air chamber, from which it passes on to another chamber, to be applied to the product.
The European patent document under application publication number EP 1.784.344 is also known, which describes a capsule that, just like in the previous case, comprises an air chamber in which a fluid is injected under pressure and passes on to a chamber containing a product such as a food product through orifices, and the fluid mixes with the food product so that the bottom of the chamber containing the product is deformed and presses against breakage means that produce the breakage and allow the outflow of the fluid mixed with the product through an outlet provided in the capsule. This document describes a variant envisaging that the bottom of the chamber containing the product comprises a series of weakening lines replacing the breakage means, so as the pressure increases in the capsule, the passage of the fluid mixed with the product towards the outlet through the weakening lines is permitted. On the other hand, the use of capsules incorporating a series of partitions in the form of labyrinth slowing down the outflow of the fluid mixed with the product to achieve a better homogenization of said mixture prior to the outflow of the product mixed with the fluid is known in the state of the art, although in this case, the capsule does not comprise an air chamber, as described in the European patent document under application publication numbers EP 1 908 706 and EP 2 029 458.
The invention provides an alternative to the aforementioned documents, in which the mixture of the fluid with the product is homogenized, and the mixture of the fluid and the product obtained is always the same.

### DESCRIPTION OF THE INVENTION

The invention relates to a new capsule for beverage-making machines as claimed in claim 1. The capsule comprises a lid through which the machine pressure injects a fluid in a first airtight air chamber, whose bottom comprises a frusto-conical or ring support equipped with pre-sealed orifices through which the injected fluid is a applied to a second chamber containing a food product, so that the mixture of the fluid with said product is carried out. The second chamber includes a bottom equipped with perforations for the passage of the fluid mixed with the product to a third chamber, to which the fluid mixed with the food product arrives through the perforations. The third chamber slows down the outflow of the mixed fluid, and communicates to an outlet through which the fluid mixed with the food product emerges.

The imperviousness provided by the aforementioned frusto-conical support regarding the rest of the interior of the capsule allows ensuring that the food product does not enter into contact with the outside, even when its lid is perforated by accident in the area of action of the perforating element of the machine. The invention is characterized in that the capsule comprises a container opened by its top side, sealed in an airtight manner with the lid and whose bottom is equipped with a central opening in correspondence with which it comprises an extension defining the outlet. The external configuration of the container is adapted to the shape of the bowl of the machine.

In addition, the capsule comprises, as described above, a frusto-conical or ring support defining the bottom and ring shape of the first air chamber and decreasing the volume of said first air chamber so that its pressure increases rapidly. The surface of the frusto-conical support comprises the orifices for the passage of the fluid to the second chamber, but with the particularity that said orifices are covered by a ring body, are then pre-sealed and whose width is configured to be broken when the first air chamber acquires certain pressure, so that the orifices are all opened simultaneously when the first chamber reaches certain pressure, allowing the passage of the fluid to the second chamber containing the food product and mixing with said product.

This configuration enables the fluid to enter into the second chamber through all the orifices at the same time when the ring body breaks simultaneously in the orifice area, spreading in an homogenous manner, thus obtaining a homogenous mixture of the food product with the fluid.

The capsule also comprises a plate located between the bottom of the container and the frusto-conical support, which constitutes the bottom of the second chamber and is equipped with the perforations allowing the passage of the fluid mixed with the food product, which, along with the bottom of the container, define the third chamber, so that, when an increase in the pressure of the upper surface of said plate is provoked, it produces the passage of the fluid mixed with said product to the third chamber.

The central opening of the bottom of the container communicating the container with the outlet is sealed in an airtight manner by a micro-membrane that breaks when the pressure in the third chamber reaches certain value, allowing the outflow of the fluid mixed with the food product.

The micro-membrane can include notches in its surface to favor its breakage by the pressure exerted by the injected fluid, so that when the pressure reaches certain value, it produces the breakage of the notches, letting the fluid mixed with the food product pass towards the outlet. The micro-membrane can be made from aluminum, plastic, a polymer, silicone, textile material and even an airtight nipple equipped with a pressurized opening valve.

In a preferred embodiment of the invention, the frusto-conical support is opened by its upper and lower bases, and their borders are ended by means of an upper peripheral rim and a lower peripheral rim, respectively. The upper peripheral rim is affixed to the lower surface of the lid, and the lower peripheral rim is arranged and affixed to the bottom of a peripheral step of the container, and the first air chamber is formed by; the lid, the frusto-conical support and the internal surface of the container, and the second chamber containing the food product is formed by: the frusto-conical support, the internal surface of the container and the plate, and said second chamber is occupied by the food product in its entirety.

In the preferred embodiment of the invention, the orifices of the frusto-conical support are arranged by forming at least one circle in the upper third, and present a frusto-conical configuration to increase the velocity of the passage of the fluid to the second chamber, favoring the mixture with the food product.

In another embodiment, the orifices of the frusto-conical support materialize by means of a set of micro-perforations, distributed on its entire surface with the same or different diameters.

The invention envisages that the container can include capsule-stiffening radial nerves laterally to the extension defining the outlet and from the external surface of the bottom. In any of the cases, both the stiffening radial nerves and the external profile of the container are adapted to the shape of the bowl of the machine the invention is coupled to in order to carry out the pressure injection of the fluid.

The preferred configuration of the container comprises an upper conical section, whose internal wall is a part of the first air chamber, followed by a cylindrical section defining the peripheral step in which the lower peripheral rim of the frusto-conical support is supported and affixed to, followed by a small conical chamber forming the third chamber, ended by means of the extension defining the outlet, which is constituted by a cylindrical section.

The invention envisages that the lower surface of the plate may include partitions in the form of a labyrinth, so that this configuration facilitates its assembly at the bottom of the capsule; since the partitions in the form of a labyrinth facilitate the positioning and affixing of the plate to the container, the introduction of an independent body acting as partitions in the form of a labyrinth, as in the state of the art, is not required.

The partitions provided in the lower surface of the plate are arranged near the bottom of the container to allow carrying out the labyrinth functionality homogenizing and slowing down the outflow of the fluid mixed with the food product.

The plate and the bottom of the container defining the third chamber comprise a surface selected between straight, conical and a combination thereof. The conical configuration of the plate and the bottom of the container facilitate obtaining and enjoying the beverage.

The partitions of the lower surface of the plate occupying the third chamber are arranged by forming a configuration of discontinued concentric circles, whose discontinuities face each other in alternating concentric circles to allow carrying out the labyrinth functionality, but they can also adopt a radial configuration that facilitates the conduction of the fluid mixed with the food product towards the outlet when required.
In the preferred embodiment of the invention, the third chamber increases its height progressively from the outside towards the centre, so that the partitions of said third chamber present a length that decreases from the outside to the inside and whose height increases from the outside to the inside.
The perforations of the plate can be constituted by a set of micro-perforations, such as micro-circles, micro-frusto-conical or micro-frusto-pyramidal.

In addition, the invention envisages that the perforations of the bottom of the internal container are not micro-perforations but are larger, in which case they are sealed by means of a textile membrane with a high thickness index to allow the passage of the fluid mixed with the food product.

The invention envisages that the set of perforations or micro-perforations of the internal container are aligned forming radial lines or forming a grid.

An embodiment of the invention envisages that the external surface of the capsule comprises a roughness to facilitate the grip and manipulation in its location inside the beverage-making machine.

In order to close the capsule with the lid, the container comprises a peripheral rim in which said lid is thermo-sealed, while the upper peripheral rim of the frusto-conical support is thermo-sealed at the same time, as described above.

The arrangement of a number of blades provoking a laminar flow for the outflow of the fluid mixed with the food product towards the outside of the outlet is envisaged inside the outlet to obtain a fluid outflow in the form of a "mouse's tail".

In one embodiment, the blades can adopt a radial fin configuration, and in another embodiment they are constituted by a longitudinal body formed by sections of diametral partitions alternating orthogonally in the vertical direction, whose borders present horizontal extensions in opposite directions at each midpoint of said borders in the form of steps to obtain a fluid outflow in the form of a "mouse's tail".

If the container comprises the stiffening radial nerves and the blades inside the outlet, said container is manufactured by means of an injection method, obtaining one single piece.

It can also be manufactured by means of a thermoforming method in the case it does not incorporate said radial nerves.
Any appropriate material may be used for the manufacture of the capsule, from polymers, plastic compounds, plasticized cardboard and even metallic materials such as aluminum.
In any of these cases, the capsule configuration described maintains the product contained inside the capsule isolated from the outside by means of the airtight closure provided by the upper lid and the micro-membrane until the moment when the beverage is elaborated as described above. In addition, the use of the micro-membrane, which breaks due to the increase in pressure, prevents the need to include, within the capsule, breakage elements of the bottom of the capsule to allow the outflow of the fluid mixed with the food product, facilitating the manufacture of the capsule considerably.
Next, in order to facilitate a better comprehension of this specification, and forming an integral part of the same, a series of figures accompany this specification in which the object of the invention has been represented by way of illustration and not by way of limitation.

### BRIEF DESCRIPTION OF THE FIGURES

Figure 1.- shows an exploded perspective view of an example of an embodiment of the capsule of the invention. In this embodiment, the plate constituting the bottom of the second chamber and delimiting the third chamber presents a configuration constituted by a flat surface.
Figure 2.- shows a sectional view of the previous figure in which the different elements making up the capsule are assembled in its interior.
Figure 3.- shows a sectional view equivalent to the previous figure of another example of an embodiment of the invention, in which the plate constituting the bottom of the second chamber and delimiting the third chamber presents a conical configuration whose lower surface comprises partitions in the form of a labyrinth so that, when assembling the plate, they are arranged inside the third chamber and near the bottom of the container to slow down the outflow of the fluid mixed with the food product.
Figure 4a and 4b.- show a perspective lower view of the plates used in the capsule shown on figures 2 and 3, respectively.
Figure 5.- shows a perspective view of the frusto-conical support used in all of the embodiments of the invention, which includes orifices covered by a ring body that breaks simultaneously in the area of said orifices when the pressure in the first air chamber increases to homogenize the mixture of the fluid with the food product.
Figure 6.- shows embodiment perspective view of the blades included in the outlet to obtain a fluid in the form of a "mouse's tail".

### DESCRIPTION OF THE PREFERRED EMBODIMENTS

Next, a description of the invention is made with the help of the previous figures.

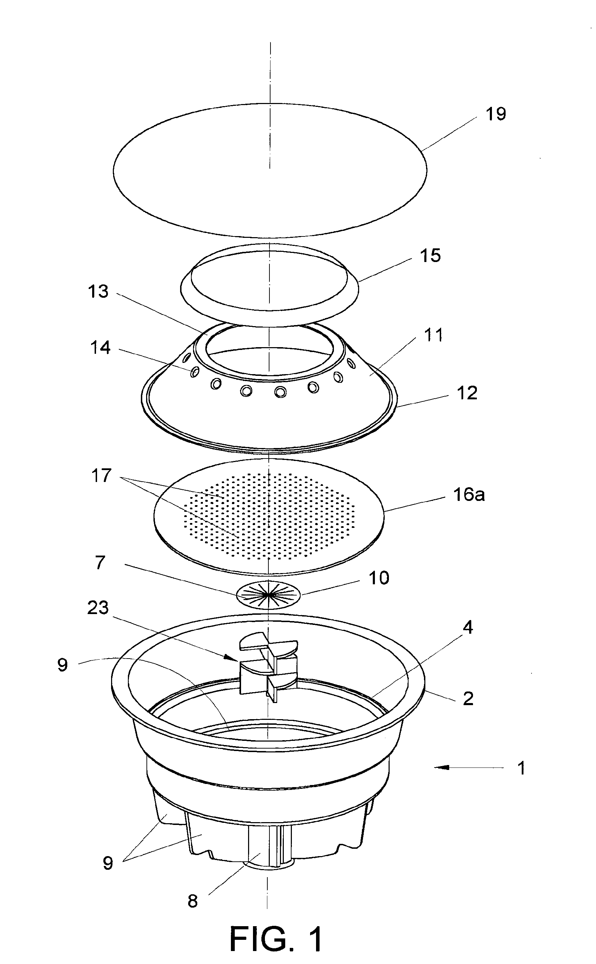

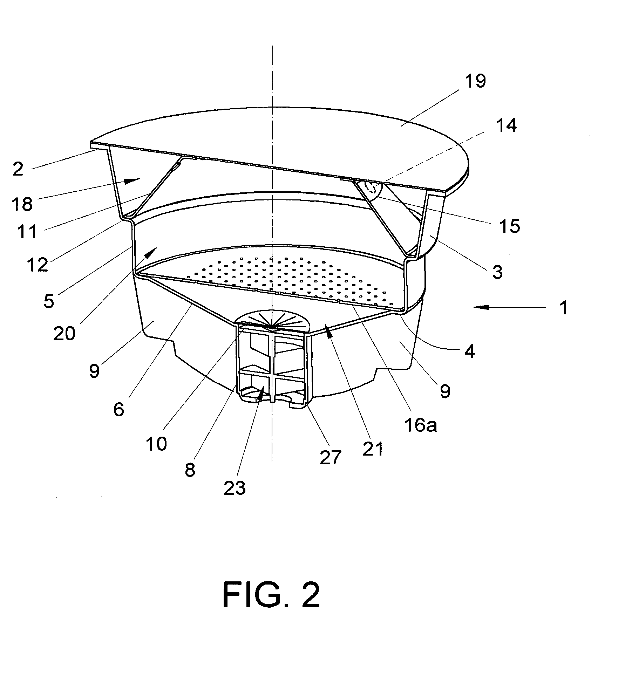

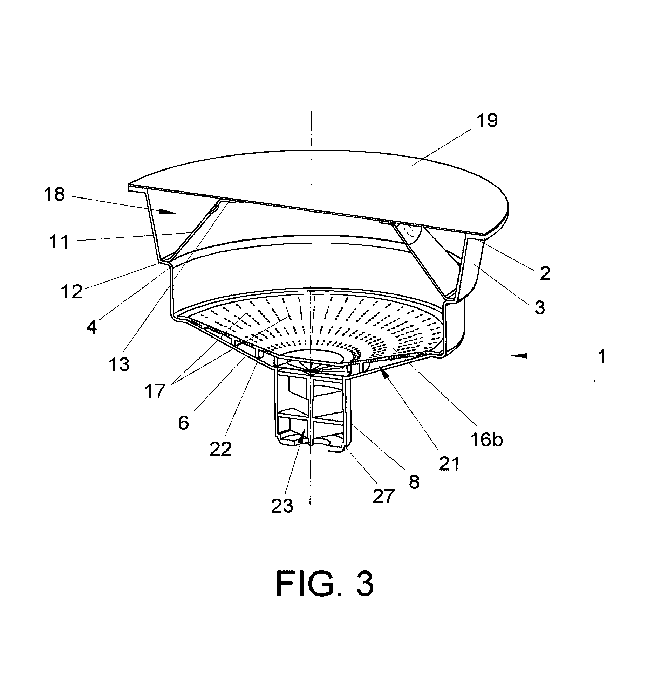

The capsule of the invention comprises a container 1 opened by its top side, which presents a peripheral rim 2 in its nozzle ended by a conical section 3, which, after a step 4, continues along a cylindrical section 5 ending downwards in a conical bottom 6, equipped with a central opening, sealed in an airtight manner by a micro-membrane 7, in correspondence with which an extension defining the outlet 8 is comprised. Laterally to the outlet 8, it incorporates capsule-stiffening and supporting radial nerves 9 according to the embodiment shown on figures 1 and 2, but it may also dispense with said stiffening and supporting radial nerves 9, as shown in figure 3.

The structure of the container 1 is designed to adapt to the shape of the bowl of the machine to which it is coupled for the elaboration of the beverage, as will be described below.

The conical section 3 has a rough external surface that facilitates the grip of the capsule for its manipulation and introduction into the beverage-making machine.

The micro-membrane 7 is equipped with notches 10 that facilitate the breakage of the micro-membrane by increasing the pressure inside the capsule. In addition, the micro-membrane 7 isolates the capsule through its lower part, preserving its content and preventing the oxidation of a food product contained therein for the elaboration of the beverage, allowing said food product to reach the consumer in perfect condition until the moment of its use

The example of the embodiment envisages that the central opening incorporates a small 0.5 mm-thick surface where said micro-membrane 7 is thermo-sealed in order to allow carrying out the affixing of the micro-membrane 7.

The micro-membrane 7 has a width comprised between 20-50 □m to facilitate its breakage by pressure.

The micro-membrane can be manufactured in very thin aluminum, in any plastic compound, a polymer sheet, silicone, a textile material or even an airtight nipple equipped with a pressurized opening valve.

The peripheral rim 2 of the capsule is closed with a lid 19, in which it is thermo-sealed, and for which said lid 19 is a plastic compound to allow its thermo-sealing to the container 1. This configuration keeps the food product isolated by the upper part of the container, thus preserving it in perfect condition until it reaches the consumer.

In addition, the container 1 comprises a frusto-conical support 11 or a ring defining the bottom and ring shape of a first air chamber 18, so that it presents a reduced volume, sealing it in its entirety and granting it airtight characteristics regarding the rest of the interior of the container. The surface of said frusto-conical support 11 comprises orifices 14 that are covered by a ring body 15, whose width is configured to break simultaneously at the area covering said orifices 14 when the injected fluid acquires a specific pressure, previously established by said width of the ring body 15. In the embodiment of the invention, this width is 20 µm.

The frusto-conical support 11 is opened by its lower and upper bases and its borders are ended by means of a lower peripheral rim 12 and an upper peripheral rim 13, respectively. The lower peripheral rim 12 is arranged and affixed to the step 4 of the container 1. The upper peripheral rim 13 is affixed to the lower surface of the lid 19 by thermo-sealing, which is carried out simultaneously when thermo-sealing the lid 19 to the peripheral rim 2 of the nozzle of the container 1. According to the description made, the first air chamber 18 is delimited by: the lid 19, the frusto-conical support 11 and the internal surface of the conical section 3 of the container 1.

The orifices 14 of the frusto-conical support 11 are arranged by forming a circle and present a frusto-conical configuration, even though, as described above, in an additional embodiment, said orifices will materialize by means of micro-perforations that occupy its entire surface and they may adopt different diameters depending on their location, growing larger as they approach the upper rim 13.

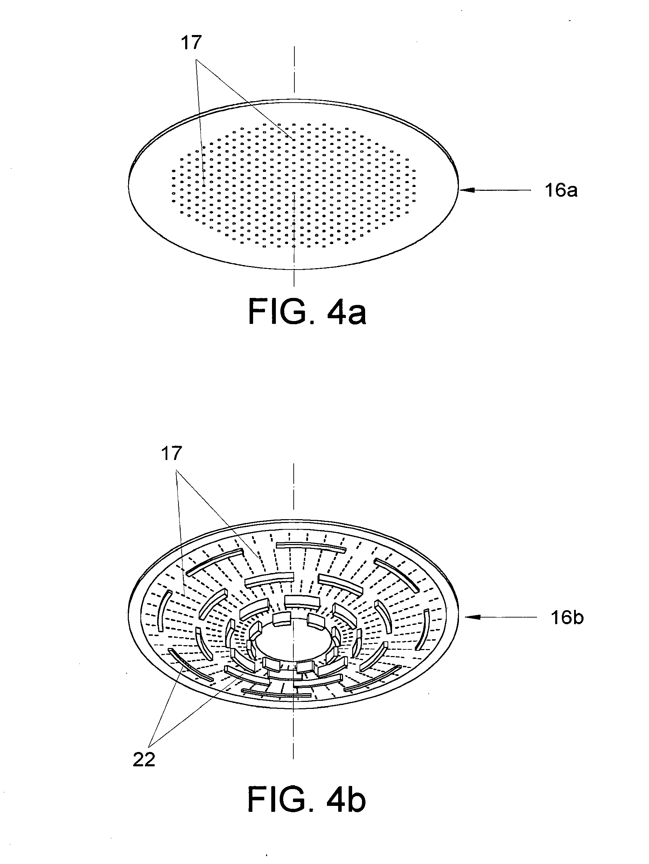

In addition, the capsule comprises a plate 16a, 16b, located between the bottom 6 of the container 1 and the frusto-conical support 11, which constitutes the bottom of a second chamber 20 containing a food product, such as coffee, for example, and is equipped with perforations 17 that allow the passage of a fluid as will be explained below. Therefore, the second chamber 20 containing the product is delimited by: the frusto-conical support 11, the internal surface of the cylindrical section 5 of the container 1 and the plate 16a, 16b.
According to the description, the plate can adopt two different configurations: a straight configuration 16a (figures 1, 2 and 4a) or a conical configuration 16b (figures 3 and 4b). In any of the cases the plate defines a third chamber 21 along with the bottom 6 of the container 1.
The plate 16a, 16b, can include partitions 22 forming a single-piece set in its lower surface. In the example of the straight plate 16a, these partitions 22 have not been represented, but it could include them. The width of the partitions 18 is 0.5 mm. Therefore, the third chamber 21 includes the partitions 22. In figure 4a, the partitions 22 have not been represented, but their location is obvious taking figures 3 and 4b as reference, in which the partitions 22 have been represented. In any of the embodiments, the third chamber 21 presents a height that increases progressively from the outside towards the centre of the capsule, so that the partitions 22 adapt to this configuration.
In a preferred embodiment of the invention, the partitions 22 forming a configuration determined by discontinued concentric circles, whose discontinuities face each other in alternating concentric circles so that the length of the partitions decreases from the outside to the inside and whose height increases from the outside to the inside.
The partitions can also be located in a radial manner to facilitate the passage of the fluid to the outlet 8 when required.
The capsule described is placed in a bowl of a conventional machine (not represented) from those used in the elaboration of beverages.
Next, the first lid 19 is perforated by means of a needle that remains introduced into the first air chamber 18 and a fluid is injected under pressure to the ring space defined by the frusto-conical support 11, such as boiling water, for example, so that, due to the reduced volume, the pressure increases rapidly, determining the breakage of the micro-membrane simultaneously in the area covering the orifices 14, so that the fluid passes through the orifices 14 of the frusto-conical support 11. Since the orifices 14 present a frusto-conical configuration, they produce an increase in the velocity of the fluid when entering the second chamber 20, with which the water enters exactly the same way in the entire chamber 20 and is distributed in an homogenous manner through the food product contained therein, which is soaked and mixed with the water. Thanks to the perforations 17 of the plate 16a, 16b, the water mixed with the coffee passes to the third chamber 21, thus favoring the separation of the cream from the coffee due to the arrangement of the partitions 22, flowing through the labyrinth they form, which homogenizes the flow towards the outlet 8. In addition, the third chamber 21 facilitates pushing the cream with the coffee towards the outside.
The perforations 17 can operate with several types of geometries, in this case 0.4 x 0.05 mm micro-slots were chosen; but they can be larger or smaller perforations, with a circular or frusto-conical geometry. In addition, there can be the case of large perforations sealed by a very thick textile membrane, which would act as a filter and an element separating the cream from the coffee.
The geometry and the dimensions of the number of perforations 17 can be adapted to the needs required in each case. In the present case, lines with approximately 12 slots and an approximate total of 50 lines were provided; obtaining an approximate outlet surface of 12 mm2. This area must be small in order to provoke an increase in the pressure of this surface, thus improving the separation process of the cream and the coffee
As the pressure keeps increasing in the third chamber 21, the micro-membrane 7 breaks in the manner described above, so that once the micro-membrane 7 is broken, the beverage is directed through the outlet 8, achieving a constant and homogenous flow.
The container represented in figures 1 and 2 is manufactured by injection in order to obtain one single piece with the stiffening and supporting radial nerves 9. Instead, the container of figure 3 is manufactured by thermoforming.
In any case, any appropriate material can be used for its manufacture, from polymers, plastic compounds, plasticized cardboard and even metallic materials such as aluminum.

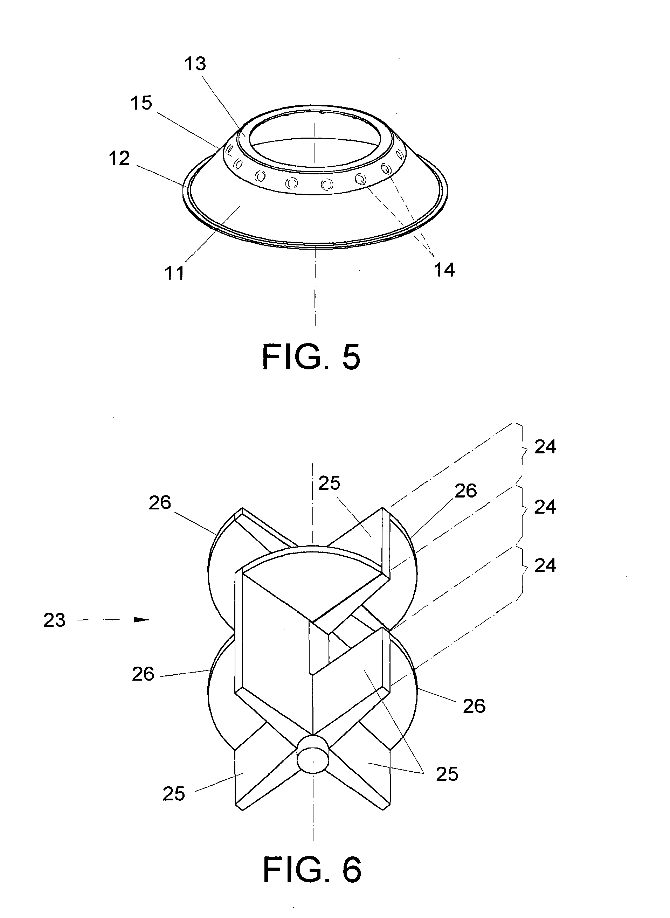

Lastly, it should be noted that the outlet 8 could incorporate blades 23, as represented in the different embodiments of the invention and shown in detail in figure 6. These blades can be supported by an internal step provided for the purpose in the outlet 8, or the possibility of them being adhered by heat to said step and/or outlet 8 is also envisaged. The fact the blades 23 are free does not affect their effectiveness of use, since the capsule is always in a vertical position at the moment of use, therefore the blades 23 will fall to their working position due to gravity. In the case of the figures 1 and 2, as commented above, the capsule is manufactured by injection so that the blades 23 form one single piece with the container 1.

The blades 23 are constituted by sections 24 of diametral partitions 25 alternating orthogonally in the vertical direction, whose borders present horizontal extensions 26 in opposite directions at each midpoint of said borders, in the form of steps.

The object of the configuration of the described blades is to provide an outflow to the fluid in the form of a "mouse's tail".

To conclude, the outlet 8 presents a small peripheral step 27 in its external edge for its appropriate coupling and stabilization in the border of the lower orifice of the bowl in the corresponding machine.

## Claims

1. Capsule for beverage-making machines comprising a lid (19) through which a fluid is injected under pressure to a first air chamber (18), whose bottom comprises orifices (14) through which the fluid injected is applied to a second chamber (20) containing a food product, and the fluid mixes with the food product and the second chamber (20) has a bottom equipped with perforations (17) for the passage of the fluid mixed with the food product to a third chamber (21) to slow down the outflow of the mixture of the fluid with the food product; and next to said third chamber (21) an outlet (8) for the mixture of the fluid with the food product is comprised; the capsule comprises:
- a container (1) opened by its top side, which is sealed in an airtight manner with a lid (19);
- a plate (16a, 16b) constituting the bottom of the second chamber (20) which is equipped with the perforations (17) for the passage of the fluid mixed with the food product, which, along with the bottom (6) of the container (1), defines the third chamber (21) so that, when the increase in the pressure in the upper surface of said plate (16a, 16b) is provoked, the passage of the fluid mixed with the food product to the third chamber (21) is permitted;
**characterized in that**:
- the capsule comprises a frusto-conical support (11) that together with the container (1) and with the lid (19) defines the first air chamber (18) said air chamber (18) with a bottom a with the shape of a ring, the surface of the frusto-conical support (11) comprises the orifices (14) for the passage of the fluid to the second chamber; and those orifices (14) are covered by a ring body (15), which seal said first air chamber (18), whose width is configured to break simultaneously in the area covering said orifices (14) when the first air chamber (18) acquires a specific pressure previously established by the width of the ring body (15);
- the capsule comprises a micro-membrane (7) that closes the opening of the bottom (6) of the container in an airtight manner, which is configured to break when the pressure of the fluid injected into the third chamber increases, allowing the passage of the fluid mixed with the food product towards the outlet (8);
- the bottom (6) of the container (1) is equipped with a central opening in correspondence with which an extension defining the outlet (8) is comprised, and whose external configuration is adapted to the bowl of the beverage-making machine.

2. Capsule for beverage-making machines according to claim 1, **characterized in that** the frusto-conical support (11) is opened by its upper and lower bases, and whose borders are ended by means of an upper peripheral rim (13) and a lower peripheral rim (12) respectively; where the upper peripheral rim (13) is affixed to the lower surface of the lid (19); and the lower peripheral rim (12) is arranged and affixed to a peripheral step (4) of the container (1), and the first air chamber (18) is formed by: the lid (19), the frusto-conical support (11) and the internal surface of the container (1), and the second chamber (20) containing the food product is formed by: the frusto-conical support (11), the internal surface of the container (1) and the plate (16a, 16b), and the second chamber (20) is entirely occupied by the food product.

3. Capsule for beverage-making machines according to claim 1, **characterized in that** the orifices (14) of the frusto-conical support (11) are arranged forming at least one circle in the upper third, and present a frusto-conical configuration for the increase in the velocity of the passage of the fluid to the second chamber (20).

4. Capsule for beverage-making machines according to claim 1, **characterized in that** the orifices (14) of the frusto-conical support (11) are materialized by means of micro-perforations distributed in its entire surface.

5. Capsule for beverage-making machines according to claim 1, **characterized in that** the container (1) comprises capsule-stiffening and supporting radial nerves (9), laterally to the extension defining the outlet (8) and from the external surface of the bottom (6), which are adapted to the shape of the bowl of the machine to which it is coupled.

6. Capsule for beverage-making machines according to claim 2, **characterized in that** the container (1) comprises an upper conical section (3) whose internal wall is a part of the first air chamber (18), followed by a cylindrical section (5) defining the peripheral step (4) supporting the lower peripheral rim (12) of the frusto-conical support (11), followed by a small conical chamber forming the third chamber (21), which is ended by means of the extension defining the outlet (8); and said extension is constituted by a cylindrical section.

7. Capsule for beverage-making machines according to claim 1, **characterized in that** the plate (16a, 16b) and the bottom of the container (1) defining the third chamber (21) comprise a surface selected between straight, conical and a combination thereof.

8. Capsule for beverage-making machines according to claim 7, **characterized in that** the lower surface of the plate (16a, 16b) is connected to partitions (22) in the form of a labyrinth, which are arranged in the third chamber (21) and near the bottom (6) of the container (1) to slow down the outflow of the fluid mixed with the food product.

9. Capsule for beverage-making machines according to claim 7, **characterized in that** the third chamber (21) increases progressively in height from the outside towards the centre.

10. Capsule for beverage-making machines according to claim 8, **characterized in that** the partitions (22) are arranged by forming a configuration selected from discontinued concentric circles, whose discontinuities face each other in alternating concentric circles; and a radial configuration.

11. Capsule for beverage-making machines according to claims 8 and 9, **characterized in that** the length of the partitions (22) decreases from the outside to the inside and whose height increases from the outside to the inside.

12. Capsule for beverage-making machines according to claim 1, **characterized in that** the perforations (17) of the plate (16a, 16b) comprise a set of micro-perforations with a configurations selected among micro-circles, micro-frusto-conical and micro-frusto-pyramidal.

13. Capsule for beverage-making machines according to claim 1, **characterized in that** the perforations (17) of the plate (16a, 16b) are sealed by means of a textile membrane with a high thickness index.

14. Capsule for beverage-making machines according to claims 12 or 13, **characterized in that** the set of perforations (17) or micro-perforations of the plate (16a, 16b) are aligned in radial lines or in the form of a grid.

15. Capsule for beverage-making machines according to claim 1, **characterized in that** the micro-membrane (7) is made from a material selected among aluminum, plastic, a polymer, silicone, a textile material and an airtight nipple with a pressurized opening valve.

16. Capsule for beverage-making machines according to claim 1, **characterized in that** the external surface of the capsule comprises a roughness facilitating the grip.

17. Capsule for beverage-making machines according to claim 2, **characterized in that** the container (1) comprises a peripheral rim (2) in which the lid (19) is thermo-sealed.

18. Capsule for beverage-making machines according to claim 1, **characterized in that** the interior of the outlet (8) comprises blades (23) provoking a laminar flow of the fluid towards the outside of the outlet in the form of a "mouse's tail".

19. Capsule for beverage-making machines according to claim 18, **characterized in that** the blades present a configuration selected between radial fins and sections (24) of diametral batches (25) alternating orthogonally in the vertical direction, whose borders present horizontal extensions (26) in opposite directions at each midpoint of said borders, in the form of steps.

20. Capsule for beverage-making machines according to claim 1, **characterized in that** the micro-membrane (7) comprises notches (10) to facilitate its breakage when the pressure in the third chamber increases.

21. Capsule for beverage-making machines according to claim 1, **characterized in that** the container (1) is manufactured by means of a method selected between thermoforming and injection.

22. Capsule for beverage-making machines according to claim 1, **characterized in that** the material for its manufacture is selected among polymers, plastic compounds, plasticized cardboard, metallic materials or a combination thereof.

## Patentansprüche

1. Kapsel für Getränkezubereitungsmaschinen, die einen Deckel (19) umfasst, durch den eine Flüssigkeit unter Druck in eine erste Luftkammer (18) eingespritzt wird, deren Boden Öffnungen (14) umfasst, über die die eingespritzte Flüssigkeit in eine zweite Kammer (20) eingebracht wird, die ein Lebensmittelerzeugnis enthält, und sich die Flüssigkeit mit dem Lebensmittelerzeugnis vermischt, und die zweite Kammer (20) einen Boden hat, der mit Perforationen (17) zum Durchlassen der mit dem Lebensmittelerzeugnis vermischten Flüssigkeit in eine dritte Kammer (21) versehen ist, um das Ausströmen des Gemischs der Flüssigkeit mit dem Lebensmittelerzeugnis zu verlangsamen, und wobei unmittelbar auf die dritte Kammer (21) folgend ein Auslass (8) für das Gemisch der Flüssigkeit mit dem Lebensmittelerzeugnis enthalten ist und die Kapsel umfasst:
einen Behälter (1), der über seine Oberseite offen ist, die mit einem Deckel (19) luftundurchlässig abgedichtet ist;
eine Platte (16a, 16b), die den Boden der zweiten Kammer (20) bildet, der mit den Perforationen (17) zum Durchlassen der mit dem Lebensmittelerzeugnis vermischten Flüssigkeit versehen ist und die zusammen mit dem Boden (6) des Behälters (1) die dritte Kammer (21) bildet, so dass, wenn der Druckanstieg an der Oberseite der Platte (16a, 16b) veranlasst wird, die mit dem Lebensmittelerzeugnis vermischte Flüssigkeit in die dritte Kammer (21) durchgelassen wird;
**dadurch gekennzeichnet, dass**
die Kapsel einen kegelstumpfförmigen Träger (11) umfasst, der zusammen mit dem Behälter (1) und mit dem Deckel (19) die erste Luftkammer (18) bildet, wobei die Luftkammer (18) einen Boden mit der Form eines Rings hat, die Oberfläche des kegelstumpfförmigen Trägers (11) die Öffnungen (14) zum Durchlassen der Flüssigkeit in die zweite Kammer umfasst und diese Öffnungen (14) von einem Ringkörper (15) abgedeckt werden, der die erste Luftkammer (18) abdichtet und dessen Breite so eingerichtet ist, dass er gleichzeitig in dem Bereich bricht, in dem die Öffnungen (14) abgedeckt sind, wenn die erste Luftkammer (18) einen bestimmten Druck erreicht, der im Voraus durch die Breite des Ringkörpers (15) bestimmt wird;
die Kapsel eine Mikromembran (7) umfasst, die die Öffnung des Bodens (6) des Behälters luftdicht verschließt, und die so eingerichtet ist, dass sie reißt, wenn der Druck der in die dritte Kammer eingespritzten Flüssigkeit ansteigt, so dass die mit dem Lebensmittelerzeugnis vermischte Flüssigkeit zu dem Auslass (8) hin durchgelassen wird;
der Boden (6) des Behälters (1) mit einer Mittelöffnung versehen ist, der einer den Auslass (8) bildende Abmessung entspricht und deren Außenform an die Aufnahme der Getränkezubereitungsmaschine angepasst ist.

2. Kapsel für Getränkezubereitungsmaschinen nach Anspruch 1, **dadurch gekennzeichnet, dass** der kegelstumpfförmige Träger (11) über sein oberes und sein unteres Ende geöffnet ist, deren äußere Ränder in einem oberen Umfangsrand (13) bzw. einem unteren Umfangsrand (12) enden, wobei der obere Umfangsrand (13) an der unteren Fläche des Deckels (19) befestigt ist und der untere Umfangsrand (12) an einem Umfangsabsatz (4) des Behälters (1) angeordnet und befestigt ist und die erste Luftkammer (18) durch den Deckel (19), den kegelstumpfförmigen Träger (11) sowie die Innenfläche des Behälters (1) gebildet wird und die zweite Kammer (20), die das Lebensmittelerzeugnis enthält, durch den kegelstumpfförmigen Träger (11), die Innenfläche des Behälters (1) sowie die Platte (16a, 16b) gebildet wird und die zweite Kammer (20) vollständig von dem Lebensmittelerzeugnis eingenommen wird.

3. Kapsel für Getränkezubereitungsmaschinen nach Anspruch 1, **dadurch gekennzeichnet, dass** die Öffnungen (14) des kegelstumpfförmigen Trägers (11) so eingerichtet sind, dass sie im oberen Drittel wenigstens einen Kreis bilden, und dass sie eine Kegelstumpfform haben, durch die die Geschwindigkeit beim Durchlassen der Flüssigkeit in die zweite Kammer (20) erhöht wird.

4. Kapsel für Getränkezubereitungsmaschinen nach Anspruch 1, **dadurch gekennzeichnet, dass** die Öffnungen (14) des kegelstumpfförmigen Trägers (11) als Mikroperforationen ausgeführt sind, die über seine gesamte Oberfläche verteilt sind.

5. Kapsel für Getränkezubereitungsmaschinen nach Anspruch 1, **dadurch gekennzeichnet, dass** der Behälter (1) die Kapsel versteifende und stützende radiale Rippen (9) seitlich von dem Ansatz, der den Auslass (8) bildet, und von der Außenfläche des Bodens (6) aus umfasst, die an die Form der Aufnahme der Maschine angepasst sind, in die sie eingesetzt wird.

6. Kapsel für Getränkezubereitungsmaschinen nach Anspruch 2, **dadurch gekennzeichnet, dass** der Behälter (1) einen oberen kegelförmigen Abschnitt (3) umfasst, dessen Innenwand ein Teil der ersten Luftkammer (18) ist und auf den ein zylindrischer Abschnitt (5) folgt, der den Umfangsabsatz (4) bildet, der den unteren Umfangsrand (12) des kegelstumpfförmigen Trägers (11) trägt, auf den eine kleine kegelförmige Kammer folgt, die die dritte Kammer (21) bildet und die an dem Ansatz endet, der den Auslass (8) bildet, wobei der Ansatz durch einen zylindrischen Abschnitt gebildet wird.

7. Kapsel für Getränkezubereitungsmaschinen nach Anspruch 1, **dadurch gekennzeichnet, dass** die Platte (16a, 16b) und der Boden des Behälters (1), die die dritte Kammer (21) bilden, eine Fläche umfassen, die aus einer geraden Fläche, einer kegelförmigen Fläche und einer Kombination daraus ausgewählt wird.

8. Kapsel für Getränkezubereitungsmaschinen nach Anspruch 7, **dadurch gekennzeichnet, dass** die Unterseite der Platte (16a, 16b) mit Trennwänden (22) in Form eines Labyrinths verbunden ist, die in der dritten Kammer (21) und nahe an dem Boden (6) des Behälters (1) angeordnet sind, um das Ausströmen der mit dem Lebensmittelerzeugnis vermischten Flüssigkeit zu verlangsamen.

9. Kapsel für Getränkezubereitungsmaschinen nach Anspruch 7, **dadurch gekennzeichnet, dass** die Höhe der dritten Kammer (21) von außen zur Mitte hin allmählich zunimmt.

10. Kapsel für Getränkezubereitungsmaschinen nach Anspruch 8, **dadurch gekennzeichnet, dass** die Trennwände (22) angeordnet werden, indem eine Form ausgebildet wird, die aus unterbrochenen konzentrischen Kreisen, deren Unterbrechungen einander in abwechselnden konzentrischen Kreisen zugewandt sind, und einer radialen Form ausgewählt wird.

11. Kapsel für Getränkezubereitungsmaschinen nach den Ansprüchen 8 und 9, **dadurch gekennzeichnet, dass** die Länge der Trennwände (22) von außen nach innen abnimmt, und ihre Höhe von außen nach innen zunimmt.

12. Kapsel für Getränkezubereitungsmaschinen nach Anspruch 1, **dadurch gekennzeichnet, dass** die Perforationen (17) der Platte (16a, 16b) eine Gruppe von Mikroperforationen mit Formen umfassen, die aus Mikro-Kreisen, Mikro-Kegelstümpfen und Mikro-Pyramidenstümpfen ausgewählt werden.

13. Kapsel für Getränkezubereitungsmaschinen nach Anspruch 1, **dadurch gekennzeichnet, dass** die Perforationen (17) der Platte (16a, 16b) mittels einer Textilmembran mit einem hohen Dicke-Index (thickness index) abgedichtet sind.

14. Kapsel für Getränkezubereitungsmaschinen nach Anspruch 12 oder 13, **dadurch gekennzeichnet, dass** die Perforationen (17) oder Mikroperforationen der Platte (16a, 16b) in der Gruppe in radialen Linien oder in Form eines Gitters ausgerichtet sind.

15. Kapsel für Getränkezubereitungsmaschinen nach Anspruch 1, **dadurch gekennzeichnet, dass** die Mikromembran (17) aus einem Material besteht, das aus Aluminium, Kunststoff, einem Polymer, Silikon, einem Textilmaterial und einem luftdichten Nippel mit einem unter Druck öffnenden Ventil ausgewählt wird.

16. Kapsel für Getränkezubereitungsmaschinen nach Anspruch 1, **dadurch gekennzeichnet, dass** die Außenfläche der Kapsel eine Rauigkeit aufweist, die das Ergreifen erleichtert.

17. Kapsel für Getränkezubereitungsmaschinen nach Anspruch 2, **dadurch gekennzeichnet, dass** der Behälter (1) einen Umfangsrand (2) umfasst, an den der Deckel (19) heißgesiegelt ist.

18. Kapsel für Getränkezubereitungsmaschinen nach Anspruch 1, **dadurch gekennzeichnet, dass** der Auslass (8) im Inneren Flügel (23) umfasst, die eine laminare Strömung der Flüssigkeit zur Außenseite des Auslasses hin in Form eines "Mäuseschwanzes" bewirken.

19. Kapsel für Getränkezubereitungsmaschinen nach Anspruch 18, **dadurch gekennzeichnet, dass** die Flügel eine Form haben, die aus radialen Rippen und Teilabschnitten (24) diametraler Gruppen (25) ausgewählt wird, die sich in der vertikalen Richtung im rechten Winkel abwechseln und deren äußere Ränder horizontale Ansätze (26) in entgegengesetzten Richtungen an jedem Mittelpunkt der äußeren Ränder in Form von Absätzen aufweisen.

20. Kapsel für Getränkezubereitungsmaschinen nach Anspruch 1, **dadurch gekennzeichnet, dass** die Mikromembran (7) Einkerbungen (10) umfasst, durch die sie leichter reißt, wenn der Druck in der dritten Kammer ansteigt.

21. Kapsel für Getränkezubereitungsmaschinen nach Anspruch 1, **dadurch gekennzeichnet, dass** der Behälter (1) mittels eines Verfahrens hergestellt wird, das aus Thermoformen und Spritzgießen ausgewählt wird.

22. Kapsel für Getränkezubereitungsmaschinen nach Anspruch 1, **dadurch gekennzeichnet, dass** das Material zur Herstellung aus Polymeren, Kunststoffverbindungen, plastifiziertem Karton, Metallmaterialien oder einer Kombination derselben ausgewählt wird.

## Revendications

1. Capsule pour machines de fabrication de boisson comprenant un couvercle (19) à travers lequel un fluide est injecté sous pression vers une première chambre d'air (18), dont le fond comprend des orifices (14) à travers lesquels le fluide injecté est appliqué à une seconde chambre (20) contenant un produit alimentaire, et le fluide se mélange avec le produit alimentaire et la seconde chambre (20) comporte un fond équipé de perforations (17) pour le passage du fluide mélangé avec le produit alimentaire vers une troisième chambre (21) pour ralentir le flux sortant du mélange du fluide avec le produit alimentaire ; et après ladite troisième chambre (21) un orifice de sortie (8) pour le mélange du fluide avec le produit alimentaire est fourni ; la capsule comprend :
un récipient (1) ouvert par son côté supérieur, qui est scellé d'une manière étanche à l'air avec un couvercle (19) ;
une plaque (16a, 16b) constituant le fond de la seconde chambre (20) qui est équipée de perforations (17) pour le passage du fluide mélangé avec le produit alimentaire, qui, avec le fond (6) du récipient (1), définit la troisième chambre (21) de telle manière que, quand l'augmentation de la pression dans la surface supérieure de ladite plaque (16a, 16b) est provoquée, le passage du fluide mélangé avec le produit alimentaire vers la troisième chambre (21) est permis ;
**caractérisée en ce que** :
la capsule comprend un support tronconique (11) qui conjointement avec le récipient (1) et avec le couvercle (19) définit la première chambre d'air (18) ladite chambre d'air (18) comportant un fond de forme annulaire, la surface du support tronconique (11) comprend les orifices (14) pour le passage du fluide vers la seconde chambre ; et ces orifices (14) sont couverts par un corps annulaire (15), qui scelle ladite première chambre d'air (18), dont la largeur est configurée pour casser simultanément dans la zone couvrant lesdites orifices (14) quand la première chambre d'air (18) acquiert une pression spécifique établie au préalable par la largeur du corps annulaire (15) ;
la capsule comprend une micro-membrane (7) qui ferme l'ouverture du fond (6) du récipient d'une manière étanche à l'air, qui est configurée pour se casser quand la pression du fluide injecté dans la troisième chambre augmente, permettant le passage du fluide mélangé avec le produit alimentaire vers l'orifice de sortie (8) ;
le fond (6) du récipient (1) est équipé d'une ouverture centrale en correspondance avec laquelle une extension définissant l'orifice de sortie (8) est formée, et dont la configuration extérieure est adaptée à la cuvette de la machine de fabrication de boisson.

2. Capsule pour machines de fabrication de boisson selon la revendication 1, **caractérisée en ce que** le support tronconique (11) est ouvert par ses bases supérieure et inférieure, et dont les limites se terminent au moyen d'un rebord périphérique supérieur (13) et d'un rebord périphérique inférieur (12) respectivement ; où le rebord périphérique supérieur (13) est fixé à la surface inférieure du couvercle (19) ; et le rebord périphérique inférieur (12) est agencé et fixé sur un degré périphérique (4) du récipient (1), et la première chambre d'air (18) est formée par : le couvercle (19), le support tronconique (11) et la surface intérieure du récipient (1), et la seconde chambre (20) contenant le produit alimentaire est formée par : le support tronconique (11), la surface intérieure du récipient (1) et la plaque (16a, 16b), et la seconde chambre (20) est entièrement occupée par le produit alimentaire.

3. Capsule pour machines de fabrication de boisson selon la revendication 1, **caractérisée en ce que** les orifices (14) du support tronconique (11) sont agencés formant au moins un cercle dans le tiers supérieur, et présentent une configuration tronconique pour l'augmentation de la vitesse du passage du fluide vers la seconde chambre (20).

4. Capsule pour machines de fabrication de boisson selon la revendication 1, **caractérisée en ce que** les orifices (14) du support tronconique (11) sont matérialisés au moyen de micro-perforations distribuées sur toute sa surface.

5. Capsule pour machines de fabrication de boisson selon la revendication 1, **caractérisée en ce que** le récipient (1) comprend des nervures radiales de support et de raidissement de capsule (9), latéralement à l'extension définissant l'orifice de sortie (8) et depuis la surface extérieure du fond (6), qui sont adaptées à la forme de la cuvette de la machine à laquelle il est couplé.

6. Capsule pour machines de fabrication de boisson selon la revendication 2, **caractérisée en ce que** le récipient (1) comprend une section conique supérieure (3) dont la paroi intérieure est une partie de la première chambre d'air (18), suivie par une section cylindrique (5) définissant le degré périphérique (4) supportant le rebord périphérique inférieur (12) du support tronconique (11), suivie par une petite chambre conique formant la troisième chambre (21), qui est terminée au moyen de l'extension définissant l'orifice de sortie (8) ; et ladite extension est constituée par une section cylindrique.

7. Capsule pour machines de fabrication de boisson selon la revendication 1, **caractérisée en ce que** la plaque (16a, 16b) et le fond du récipient (1) définissant la troisième chambre (21) comprennent une surface sélectionnée parmi une surface droite, conique et une combinaison de celles-ci.

8. Capsule pour machines de fabrication de boisson selon la revendication 7, **caractérisée en ce que** la surface intérieure de la plaque (16a, 16b) est connectée aux séparations (22) sous la forme d'un labyrinthe, qui sont agencées dans la troisième chambre (21) et près du fond (6) du récipient (1) pour ralentir le flux sortant du fluide mélangé avec le produit alimentaire.

9. Capsule pour machines de fabrication de boisson selon la revendication 7, **caractérisée en ce que** la troisième chambre (21) augmente progressivement en hauteur depuis l'extérieur vers le centre.

10. Capsule pour machines de fabrication de boisson selon la revendication 8, **caractérisée en ce que** les séparations (22) sont agencées en formant une configuration sélectionnée parmi des cercles concentriques discontinus, dont les discontinuités se font face en cercles concentriques alternés ; et une configuration radiale.

11. Capsule pour machines de fabrication de boisson selon les revendications 8 et 9, **caractérisée en ce que** la longueur des séparations (22) diminue de l'extérieur vers l'intérieur et dont la hauteur augmente de l'extérieur vers l'intérieur.

12. Capsule pour machines de fabrication de boisson selon la revendication 1, **caractérisée en ce que** les perforations (17) de la plaque (16a, 16b) comprennent une série de micro-perforations avec une configuration sélectionnée parmi des micro-cercles, des micro-troncs de cône et des micro-troncs de pyramide.

13. Capsule pour machines de fabrication de boisson selon la revendication 1, **caractérisée en ce que** les perforations (17) de la plaque (16a, 16b) sont scellées au moyen d'une membrane textile avec un indice d'épaisseur élevé.

14. Capsule pour machines de fabrication de boisson selon les revendications 12 ou 13, **caractérisée en ce que** la série de perforations (17) ou micro-perforations de la plaque (16a, 16b) sont alignées en lignes radiales ou sous la forme d'une grille.

15. Capsule pour machines de fabrication de boisson selon la revendication 1, **caractérisée en ce que** la micro-membrane (7) est faite d'un matériau sélectionné parmi l'aluminium, le plastique, un polymère, le silicone, un matériau textile et un joint de silicone étanche à l'air avec une vanne d'ouverture sous pression.

16. Capsule pour machines de fabrication de boisson selon la revendication 1, **caractérisée en ce que** la surface extérieure de la capsule comporte une rugosité ou des marques facilitant l'agrippement.

17. Capsule pour machines de fabrication de boisson selon la revendication 2, **caractérisée en ce que** le récipient (1) comprend un rebord périphérique (2) dans lequel le couvercle (19) est thermo-scellé.

18. Capsule pour machines de fabrication de boisson selon la revendication 1, **caractérisée en ce que** l'intérieur de l'orifice de sortie (8) comprend des lames (23) provoquant un flux laminaire du fluide vers l'extérieur de l'orifice de sortie sous la forme d'une "queue de souris".

19. Capsule pour machines de fabrication de boisson selon la revendication 18, **caractérisée en ce que** les lames présentent une configuration sélectionnée entre des ailettes radiales et des sections (24) de bandes diamétrales (25) alternant orthogonalement dans la direction verticale, dont les limites présentent des extensions horizontales (26) dans des directions opposées à chaque point médian desdites limites, sous la forme de degrés.

20. Capsule pour machines de fabrication de boisson selon la revendication 1, **caractérisée en ce que** la micro-membrane (7) comprend des fentes (10) pour faciliter sa cassure quand la pression dans la troisième chambre augmente.

21. Capsule pour machines de fabrication de boisson selon la revendication 1, **caractérisée en ce que** le récipient (1) est fabriqué par un procédé sélectionné entre le thermoformage et l'injection.

22. Capsule pour machines de fabrication de boisson selon la revendication 1, **caractérisée en ce que** le matériau pour sa fabrication est sélectionné parmi des polymères, des composés de plastiques, du carton plastifié, des matériaux métalliques ou une combinaison de ceux-ci.
